# DEMANDE DE BREVET EUROPEEN

(11) **EP 0 710 794 A1**
(43) Date de publication de la demande: **08.05.1996**
(21) Numéro de dépôt: 95402435.2
(22) Date de dépôt: 02.11.1995
(51) Int. Cl.: F16L 47/02, F16L 33/00

(54) **Dispositif de raccordement d'un tuyau sur un insert**

(30) Priorité: 07.11.1994 FR 19940013298
(71) Demandeur: HUTCHINSON, F-75008 Paris (FR)
(72) Inventeur: Andre, Maxime, F-45220 Chateaurenard (FR)
(74) Mandataire: Ramey, Daniel, et al

(57) **Abrégé**

Dispositif de raccordement d'un tuyau en caoutchouc ou analogue sur un embout, comprenant une pièce (18) de matière plastique surmoulée sur l'extrémité (16) du tuyau enfilée sur l'embout (12) pour comprimer radialement cette extrémité, la pièce (18) comprenant une fente ou rainure longitudinale (20) permettant son démontage par coupure ou rupture.

L'invention s'applique notamment au raccordement de tuyaux souples dans les véhicules automobiles et les appareils ménagers.

## Description

L'invention concerne un dispositif de raccordement d'un tuyau sur un insert tel qu'un embout ou une tubulure, au moyen d'une pièce qui est surmoulée sur une partie de tuyau enfilée sur l'insert et qui serre ou comprime radialement cette partie de tuyau.

On connaît, notamment par les brevets français 2 596 133 et 2 693 249, des dispositifs de ce type dans lesquels la pièce surmoulée est soit en matière plastique compacte ayant un coefficient de retrait au refroidissement supérieur à 1 %, soit en matière plastique cellulaire dont l'expansion se traduit par un serrage ou une compression radiale de la partie de tuyau sur laquelle cette pièce est surmoulée. Ces dispositifs sont utilisés de façon courante dans de nombreux domaines techniques et en particulier dans le domaine automobile, notamment pour le montage de canalisations souples en caoutchouc, en élastomère ou en matière analogue sur des tubulures rigides.

Par rapport à d'autres types de raccordements utilisés dans les mêmes domaines techniques, tels que les raccords encliquetables ou les systèmes à colliers de serrage, les dispositifs précités ont la caractéristique d'être indémontables, ce qui constitue à la fois un avantage du point de vue de la fiabilité et de la durée de vie des raccords, et un inconvénient lorsqu'il faut par exemple changer un tuyau ou le démonter pour une raison quelconque.

L'invention a notamment pour but d'apporter une solution simple, efficace et économique à ce problème en permettant de conserver les avantages d'un dispositif de raccordement du type surmoulé tout en évitant l'inconvénient précité.

Elle a donc pour objet un dispositif de ce type, qui soit facilement démontable.

Elle propose à cet effet un dispositif de raccordement d'un tuyau sur un insert tel qu'un embout ou une tubulure, ce dispositif comprenant une pièce surmoulée sur une partie de tuyau enfilée sur l'insert et serrant ou comprimant radialement cette partie de tuyau sur l'insert, caractérisé en ce que ladite pièce comporte des moyens de rupture, de déchirure ou d'arrachement, en particulier pour permettre le démontage du tuyau.

Ainsi, lorsqu'on veut démonter ce tuyau, il suffit d'agir sur les moyens de rupture, de déchirure ou d'arrachement précités qui sont prévus sur la pièce surmoulée, pour obtenir le démontage de cette pièce et donc permettre le démontage ou le remplacement du tuyau sur lequel elle était montée.

Au remontage, le tuyau peut être maintenu en place sur l'insert par un moyen d'un type classique, tel qu'un collier de serrage par exemple.

Dans un mode de réalisation préféré de l'invention, ladite pièce surmoulée comprend au moins une zone de fragilisation.

Le démontage de la pièce résulte alors d'une rupture par action appropriée sur cette zone de fragilisation.

Dans un mode de réalisation particulièrement simple, ladite pièce surmoulée comprend au moins une fente ou une rainure formée dans une partie de l'épaisseur de ladite pièce.

Cette fente ou rainure débouche sur la surface extérieure de la pièce et l'une de ses faces est sensiblement tangente à la surface intérieure de la pièce ou la surface extérieure de la partie de tuyau enfilée sur l'insert.

Il suffit alors d'engager un outil, tel qu'un tournevis par exemple, dans cette fente ou rainure et d'exercer un léger choc sur l'outil pour rompre la pièce surmoulée, sans risquer d'endommager le tuyau monté sur l'insert.

L'invention sera mieux comprise et d'autres caractéristiques, détails et avantages de celle-ci appa-raitront plus clairement à la lecture de la description qui suit, faite à titre d'exemple en référence aux dessins annexés dans lesquels :
la figure 1 est une vue schématique en coupe transversale d'un dispositif selon l'invention;
la figure 2 est une demi-vue de côté et une demi-vue en coupe axiale de ce dispositif.

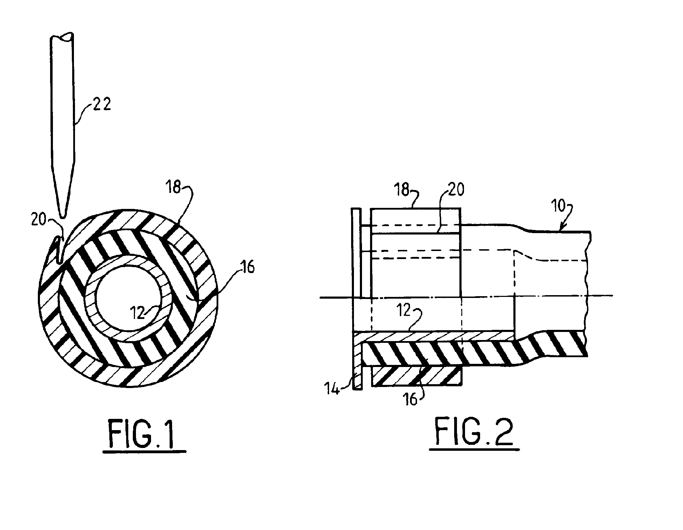

Le dispositif selon l'invention, dont un exemple de réalisation est représenté aux figures 1 et 2, est ici destiné au raccordement d'un tuyau 10 en caoutchouc ou matière analogue sur un embout rigide 12 en métal ou en matière plastique. Le tuyau 10 en caoutchouc a un diamètre interne qui peut être légèrement inférieur au diamètre externe de l'embout 12 et est enfilé sur celui-ci, par exemple jusqu'à venir en butée sur une collerette 14 de l'embout 12. Le maintien de l'extrémité 16 du tuyau sur l'embout 12 est assuré par une pièce surmoulée 18, représentée ici en forme de bague cylindrique, qui serre ou comprime radialement une partie de l'extrémité 16 du tuyau montée sur l'embout 12.

Comme déjà indiqué dans ce qui précède, cette pièce 18 peut être en une matière plastique compacte présentant un retrait au refroidissement, qui est surmoulée à chaud autour de l'extrémité 16 du tuyau et qui vient comprimer radialement celle-ci sur l'embout 12 lors de son refroidissement.

La pièce 18 peut également être en une matière plastique cellulaire ou expansée, par exemple en polyamide cellulaire, et est alors surmoulée autour de l'extrémité 16 du tuyau enfilée sur l'embout 12 de telle sorte que le cellularisation ou l'expansion de la matière se produise in situ, et exerce un serrage ou une compression radiale sur l'extrémité 16 du tuyau.

Divers moyens connus peuvent être utilisés pour améliorer le maintien de l'extrémité 16 du tuyau sur l'embout 12 : on peut par exemple prévoir des ondulations ou des nervures en dents de scie sur la surface cylindrique extérieure de l'embout 12.

Le démontage de ce dispositif s'avère assez délicat et nécessite la destruction de la pièce 18, ce qu'il est difficile de faire sans endommager le tuyau 10 et éventuellement l'embout 12, ou bien nécessite le remplacement complet du tuyau 10 et de l'embout, ce qui peut se révéler également difficile, voire même impossible dans certains cas.

L'invention apporte une solution particulièrement simple, efficace et économique à ce problème en donnant à la pièce surmoulée 18 une conformation telle qu'elle permette son démontage de façon facile et rapide.

Par exemple, et comme représenté dans les figures 1 et 2, on peut former dans la pièce 18, de moulage, une fente ou rainure longitudinale 20, qui s'étend parallèlement à l'axe longitudinal de la pièce 18, sur toute la longueur de celle-ci et sur une partie de l'épaisseur depuis la surface extérieure, de façon à constituer une zone d'affaiblissement ou de fragilisation facilitant la rupture de la pièce 18.

Pour cela, on peut comme schématisé en figure 1, introduire l'extrémité d'un tournevis 22 dans la rainure 20 et taper sur l'extrémité supérieure du tournevis pour perforer ou rompre le fond de la rainure 20 et donc ouvrir longitudinalement la pièce 18.

Avantageusement, au moins l'une ou les deux faces longitudinales de la fente ou rainure 20 sont orientées sensiblement tangentiellement à la surface cylindrique interne de la pièce 18, c'est-à-dire également à la surface cylindrique externe de l'extrémité 16 du tuyau, ce qui réduit ou évite les risques de détérioration de cette extrémité du tuyau lorsqu'on ouvre la pièce 18.

L'ouverture de cette pièce 18 permet de démonter facilement le tuyau 10 de sur l'embout 12. Par la suite, le tuyau peut être remonté sur l'embout et maintenu en place par un moyen classique tel qu'un collier de serrage par exemple.

Bien entendu, la conformation donnée à la pièce 18 pour faciliter son démontage peut prendre des formes multiples : on peut prévoir par exemple deux fentes ou rainures 20 voisines et orientées l'une vers l'autre de façon à pouvoir introduire dans ces deux fentes les deux mâchoires d'une pince coupante et ouvrir la pièce 18 par une action de serrage sur les branches de la pince.

On peut également former dans la pièce 18 deux lignes d'affaiblissement ou de fragilisation sensiblement parallèles et voisines l'une de l'autre, délimitant entre elles une bande allongée de matière que l'on peut saisir par une pince à une extrémité et arracher sur toute la longueur de la pièce 18.

De façon générale, il suffit de prévoir, dans la pièce 18, des moyens de rupture, de déchirure ou d'arrachement pour permettre un démontage facile et rapide, en quelques secondes au maximum, de cette pièce par utilisation d'un outil approprié.

Il est clair que l'invention s'applique dans de nombreux domaines techniques tels que les véhicules automobiles, les appareils ménagers, etc, notamment pour le raccordement ou le branchement de tuyaux en matière plastique, en caoutchouc ou en élastomère sur des embouts, des tubulures, des conduits, etc.

## Revendications

1. Dispositif de raccordement d'un tuyau sur un insert tel qu'un embout ou une tubulure, ce dispositif comprenant une pièce (18) surmoulée sur une partie (16) de tuyau enfilée sur l'insert (12) et serrant ou comprimant radialement cette partie de tuyau sur l'insert, **caractérisé en ce que** ladite pièce (18) comporte des moyens (20) de rupture, de déchirure ou d'arrachement, en particulier pour permettre le démontage du tuyau (10).

2. Dispositif selon la revendication 1, **caractérisé en ce que** lesdits moyens (20) sont formés sur au moins une partie de la longueur de la pièce (18).

3. Dispositif selon la revendication 1 ou 2, **caractérisé en ce que** lesdits moyens (20) s'étendent longitudinalement sur la pièce (18).

4. Dispositif selon l'une des revendications précédentes, **caractérisé en ce que** la pièce (18) comprend au moins une zone (20) de fragilisation.

5. Dispositif selon l'une des revendications précédentes, **caractérisé en ce que** la pièce (18) comprend au moins une fente ou rainure (20) formée dans une partie de l'épaisseur de la pièce (18).

6. Dispositif selon la revendication 5, **caractérisé en ce que** la fente ou rainure (20) débouche sur la surface extérieure de la pièce (18).

7. Dispositif selon la revendication 5 ou 6, **caractérisé en ce qu'**au moins une face de la fente ou rainure (18) est sensiblement tangente à la surface intérieure de cette pièce ou à la surface extérieure de la partie de tuyau (16) enfilée sur l'insert (12).

8. Dispositif selon l'une des revendications précédentes, **caractérisé en ce que** la pièce surmoulée (18) est en matière plastique compacte présentant un coefficient de retrait au refroidissement ou en matière plastique cellulaire ou expansée.
